# EUROPEAN PATENT APPLICATION

(11) **EP 2 907 743 A1**
(43) Date of publication of application: **19.08.2015**
(21) Application number: 14154971.7
(22) Date of filing: 13.02.2014
(51) Int. Cl.: B64C 1/06

(54) **Stiffening element, method for coupling the same, and shell component for an aircraft or spacecraft**

(71) Applicant: Airbus Operations GmbH, 21129 Hamburg (DE)
(72) Inventor: Eilken, Wolfgang, 22547 Hamburg (DE); Schulze, Wolfgang, 25474 Hasloh (DE); Tiryaki, Memis, 21635 Jork (DE); Brunner, Stefan, 94550 Künzing (DE)
(74) Representative: Isarpatent

(57) **Abstract**

The present invention provides a method for coupling a first 110 and a second 120 stiffening element for a skin 102 of an aircraft or spacecraft, wherein the first stiffening element has a cross-sectional profile with first 111 and second 112 web portions extending from a flange portion 113 of a predefined width toward the skin. The method comprises a step of forming a coupling zone 114 of the first stiffening element wherein the second web portion is at least partially removed to expose an inner surface 115 of the first web portion, and a step of fastening a coupling element 104-106, for coupling the stiffening elements, to the coupling zone of the first stiffening element. Under a further aspect, the invention provides a stiffening element for a skin of an aircraft or spacecraft, comprising a cross-sectional profile with first and second web portions extending from a flange portion of a predefined width toward the skin, and a coupling zone wherein the second web portion is at least partially removed to expose an inner surface of the first web portion, as well as a shell component comprising such a stiffening element.

## Description

The present invention relates to a stiffening element or a skin of an aircraft or spacecraft and to a method for coupling such a stiffening element to a second stiffening element. Furthermore, the invention relates to a shell component for an aircraft or spacecraft comprising coupled stiffening elements.

Although applicable to arbitrary stiffening elements for a skin of an aircraft or spacecraft, the invention and underlying problem will be described with reference to frames used for the fuselage shell of an aircraft. Conventionally, manufacturing of fuselage shell components involve riveting, bonding or welding stringers and frame-mounting clips or angles onto a subshell of the aircraft shell. In a further step, segments of frames having an open cross-section of e.g. C- or Z-shape, are positioned on the subshell and riveted to the clips. In alternative manufacturing processes, integral frame segments, which include a foot portion for contacting the skin, are directly mounted to the skin without intervening clips or angles. In both cases, the frame segments are joined in later manufacturing steps by riveting coupling elements like profiles or straps that to the open cross-section in order to form complete frames.

A recent trend in the manufacturing of shell components for aircraft fuselages is the use of closed frame profiles, in particular so-called Ω-profiles, that include two web portions extending away from the skin, which at their distal ends are connected by a flange portion of predetermined width that can e.g. be rounded or extend flatly in parallel to the skin. While the use of closed frame profiles enables to reduce the weight of the aircraft through an improved strength-to-weight ratio of the shell component, only blind fasteners such as blind rivets can be used to connect frame segments by attaching coupling elements like profiles or straps to the web and flange portions of a closed-profile frame. This makes assembly easier since only one-side access to the fasteners is required, but increases weight due to the decreased strength and higher weight of blind fasteners as compared to fasteners that can be applied from two sides. It therefore is an object of the present invention to reduce the weight of shell components comprising frame segments with closed profiles, while enabling easy assembly and inspection of the structure.

According to the invention, this object is attained by a coupling method with the features of claim 1 as well as a stiffening element with the features of claim 5 and a shell component with the features of claim 10.

The idea underlying the present invention consists in that a stiffening element for a skin of an aircraft or spacecraft comprises a cross-sectional profile with first and second web portions extending from a flange portion of a predefined width toward the skin, and furthermore comprises a coupling zone wherein the second web portion is at least partially removed to expose an inner surface of the first web portion. The term "stiffening element" as used herein refers e.g. to a stringer or a frame, which can be an integral frame or non-integral frame. Due to the presence of the flange portion and the first and second web portions, which are connected by the flange portion and each extend toward the direction of the skin, the profile represents a closed profile, which enables particularly efficient stiffening of the skin, with high strength-to-weight ratio, through connecting each of the web portions to the skin, such as via integral foot portions, clips, or angles.

Because in the coupling zone of the stiffening element the second web portion is at least partially removed to expose the inner surface of the first web portion, the first web portion is accessible from both sides, i.e. from the exposed inner surface in addition to the conventionally accessible outer surface of the first web portion. This enables the stiffening element to be easily coupled to another stiffening element by fastening a coupling element such as strap or angle part to the stiffening element in the coupling zone, due to being able to use reliable and efficient techniques such as riveting that require access from two sides. This also makes possible a favourably high strength-to-weight ratio of the coupling and a favourably low part count by optimally choosing the connection technique according to such needs without accessibility restraints. Furthermore, a high quality of the coupling can be achieved and maintained through quick and thorough inspection from all sides.

Because of the presence of the coupling element in the coupling zone, an enhanced stiffening effect is enabled to be provided by the coupling element, to thereby counteract a reduction in the stiffening effect of the stiffening element in the coupling zone that is to be expected due to the at least partial removal of the second web portion. For example, the coupling element is enabled to be chosen such that the overall strength of the stiffening element, if desired including further parts present, is rendered constant throughout the entire length of the stiffening element.

Advantageous developments and improvements of the invention are given in the dependent claims.

According to a preferred development, in the coupling zone the flange portion is wider than outside the coupling zone, i.e. in the main part of the stiffening element wherein the stiffening profile has the cross-sectional profile with the first and second web portions extending from the flange portion toward the skin, such that an enhanced stiffening effect is enabled to be provided by the the widened flange portion, to furthermore counteract the reduction in the stiffening effect of the stiffening element in the coupling zone that is to be expected due to the at least partial removal of the second web portion. This enables to achieve a particularly favourable strength-to-weight ratio of the shell component by mutually adjusting the strength of the coupling element and the degree of widening of the flange portion in the coupling zone. For example, the enhanced width of the flange portion in the coupling zone and the coupling element can be chosen such that the overall strength of the stiffening element including the coupling element is rendered constant throughout the entire length of the stiffening element.

Preferably, a transition zone of the first stiffening element is provided wherein the flange portion transitions from the predetermined width to the greater width, next to the coupling zone on the first stiffening element. The gradual transition enables especially strong mechanical coupling between the coupling zone to and the main part of the stiffening element lying outside the coupling zone.

According to a preferred development, at least one of the flange portion and the first web portion in the coupling zone comprises a greater thickness than a corresponding thickness outside the coupling zone. This serves to enhance the strength and therefore the stiffening effect of the stiffening element in the coupling zone. As a generalisation, the greater thickness of the flange portion and/or the greater thickness of the first web portion according to the present development as well as the greater width of the flange portion according to the previously described development with which the present development can be freely combined each represent an enlarged profile dimension of the stiffening element in the coupling zone as compared to outside the coupling zone. This enlarged profile dimension enables to counteract the reduction in the stiffening effect of the stiffening element in the coupling zone that is to be expected due to the at least partial removal of the second web portion. It becomes possible to optimise the respective degree to which the width of the flange portion is possibly widened in the coupling zone and to which the thickness of the flange portion and/or first web portion is possibly enhanced in the coupling zone in order to achieve e.g. an optimal strength-to-weight ratio or particularly easy manufacturability.

According to a preferred development, the cross-sectional profile of the stiffening element further has a second foot portion for contacting the skin, the second web portion extending from the flange portion to the second foot portion. This enables the stiffening element to be provided at least partially as an integral stiffening element, which at least partially does not require clips or angles for attachment to the skin, such that a lower weight of the aircraft and simplification of assembly become possible. Independently of the presence of the second foot portion, the cross-sectional profile of the stiffening element may further have a first foot portion for contacting the skin, the first web portion extending from the flange portion to the first foot portion, with corresponding advantages. Preferably, the second foot portion is removed in the coupling zone, thus enabling reduced weight without significant reduction in strength.

According to a preferred development, the first web portion extends substantially perpendicular to the skin. This enables installation systems of the aircraft or spacecraft such as air conditioning systems, electric or hydraulic lines etc. to be easily arranged and affixed along the first web portion, without being interfered by e.g. the possibly widened flange portion and/or the removed second web portion in the coupling zone.

According to a preferred development of the inventive shell component, which includes a second stiffening element to which the stiffening is coupled by a coupling element, the coupling element comprises at least one L-profile fastened to the stiffening element and to the second stiffening element. This enables a simple, strong and reliable coupling e.g. by riveting the L-profile to the stiffening element and the second stiffening element. Preferably, the at least one L-profile is fastened to the inner surface of the stiffening element. In this way, the L-profile is protected against mechanical damage, and the L-profile does not increase the outer dimension of the stiffening element, such that e.g. installation systems installed next to the stiffening element are not affected.

According to another preferred development, the at least one L-profile comprises an upper L-profile fastened to the first web portion and the flange portion of the stiffening element, and a lower L-profile fastened to the first web portion of the stiffening element below the upper L-profile. In this way, the coupling of the stiffening element to the second stiffening element is enabled to be highly effective in the strength it provides while accommodating measurement tolerances originating from manufacturing of the individual parts such as the stiffening element and second stiffening element.

Preferably, the upper L-profile and lower L-profile are fastened to opposing surfaces of the first web portion of the stiffening element. This enables especially high coupling strength since forces transmitted by the L-profile act at different locations of the stiffening element.

According to a preferred development, the upper L-profile and lower L-profile overlap. In this way, especially high coupling strength can be achieved overall, and in particular within the overlap region, which enables to provide particularly strong coupling strength in a desired location. For example, the overlap region may be located close to the skin in a constructional situation where loads on the stiffening element are greater close to the skin, or close to the flange portion in a constructional situation where forces on the stiffening element are greatest close to the flange portion, such as in a case of a frame configured to predominantly withstand internal pressure of the aircraft or spacecraft.

According to a preferred development, the lower L-profile is furthermore fastened to the skin. In this way, particularly strong coupling between the stiffening element and the skin enables a particularly favourable strength-to-weight-ratio of the shell component.

According to a preferred development, the second stiffening element has the cross-sectional profile with first and second web portions extending from a flange portion of the predefined width toward the skin, and further comprises a coupling zone of the second stiffening element wherein the web portion has a possibly greater width than the predefined width and the second web portion is at least partially removed to expose an inner surface of the first web portion, the coupling element being fastened furthermore to the coupling zone of the second stiffening element. In this way, the above-described advantages hold effective also on the side of the second stiffening element, resulting in a highly uniform strength of the shell component. For example, the second stiffening may be formed substantially mirror-symmetric to the first stiffening element.

Preferred embodiments of the invention will be described below with reference to the drawings, in which:
- Fig. 1: is a cut-out perspective view of a shell component for an aircraft or spacecraft according to an embodiment;
- Fig. 2: is a cut-out perspective view of stiffening element for a skin of an aircraft or spacecraft according to an embodiment; and
- Figs. 3A-C: are schematic cross sectional diagrams of different shell components for an aircraft or spacecraft, each according to an embodiment of the invention.

In the drawings, same reference signs denote same constructional elements, unless explicitly indicated otherwise.

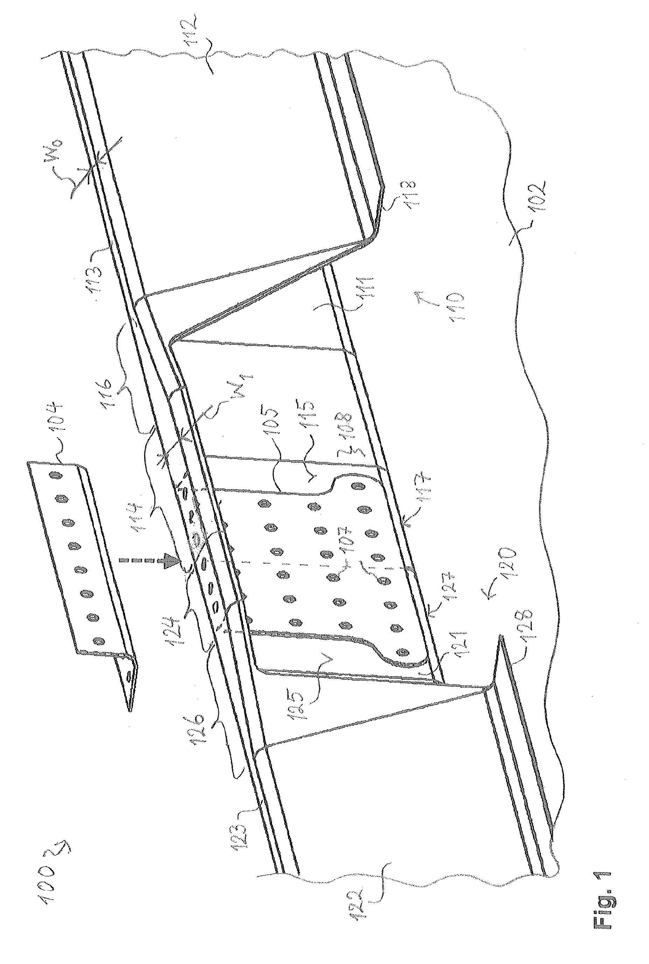

Figure 1 depicts, in a perspective view, a cut-out detail of a shell component 100 for an aircraft or spacecraft, which in the present embodiment is assumed to be a part of the outer shell of an aircraft fuselage. The perspective view is directed outward from a point of view inside the fuselage, such that an outer skin 102 of the aircraft, which forms a part of the shell component 100, presents its interior side to the observer. Furthermore comprised by the shell component 100 are a first frame segment 110 and a second frame segment 120, which are arranged on the interior side of the skin 102 to function as stiffening elements for stiffening the skin 102. The frame segments 110, 120 are coupled together by a lower L-profile 104 and an upper L-profile 105, which form a coupling element 104, 105 that is part of the shell component 100.

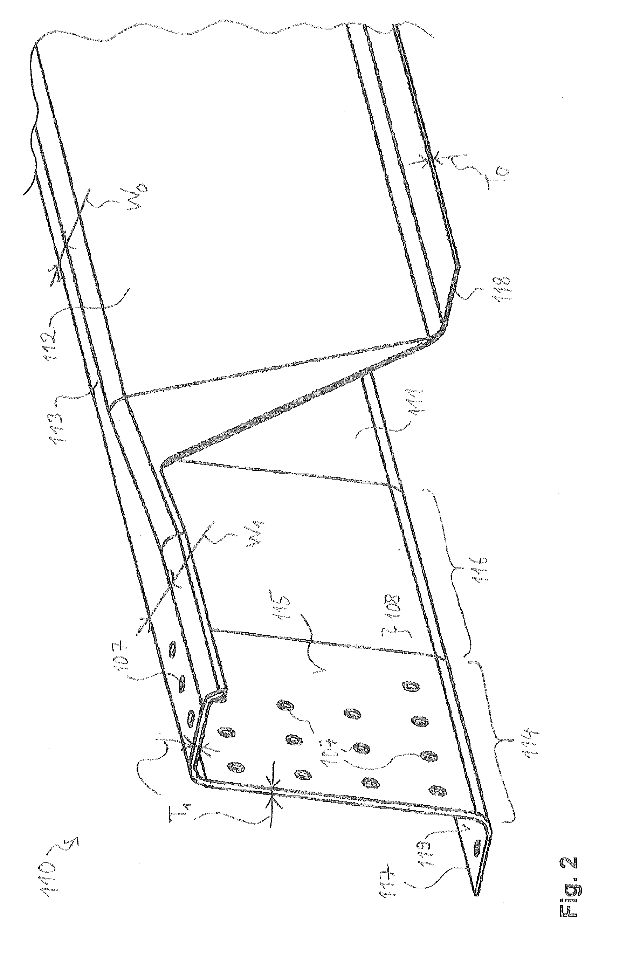

Figure 2 shows, from substantially the same perspective, a frame segment 110 identical to the first frame segment 110 of the shell component 100 depicted in Figure 1. Moreover, the frame segment 110 is identical to a mirror image of the second frame segment 120 depicted in Figure 1. As is best seen in Figure 2, the frame segment 110 is formed of a thin material of general thickness To, which may e.g. comprise a metal such as aluminium or titanium in pure or alloyed form, a plastic reinforced by carbon, glass, aramid or similar fibres, as well as a laminate of alternating layers of metal and reinforced plastic.

The thin material of the frame segment 110 follows a curved cross-sectional profile of Ω-shape, with a first foot portion 117, which flatly rests on the skin 102, and a first web portion 111, which continues from the first foot portion 117 in an upward turn of 90º away from the skin 102 to extend perpendicularly to the skin 102 up to the full height of the frame segment 110. At the upper edge of the first web portion 111, the cross-sectional profile turns by 90º into the direction opposite to the turn between the first foot portion 117 and the first web portion 111, to continue in a flange portion 113, which extends over a predetermined width W₀ in parallel to the skin 102. Then, the cross-sectional profile again turns in the same direction by an oblique angle of e.g. between 70º to 85º, to continue in a second web portion 122 that extends from the flange portion 113 to the skin 102. At the skin, the cross-sectional profile turns again by an oblique angle of the same magnitude and in the opposite direction to the turn between the flange portion 113 and the second web portion 112, to continue in a second foot portion 118, which flatly rests on the skin 102.

The frame segment 110 exhibits the above-described default cross-sectional profile over the major part of its length of which Figure 2 shows only a part. However, at an end of the frame segment 110, which is shown in Figure 2, a coupling zone 114 is formed wherein the shape of the frame segment 110 deviates from this default cross-sectional profile. Within the coupling zone 114, the second web portion 112 is removed together with the second foot portion 118, such that only the first foot portion 117, the first web portion 111 and the flange portion 113 are present. Furthermore, the flange portion 113 comprises a width W₁ within the coupling zone 114 that in the present embodiment is greater than the width W₀ of the flange portion 113 of the default cross-sectional profile outside the coupling zone 114. Additionally, the thin material of the frame segment 110 comprises a thickness T₁ within the coupling zone 114 that in the present embodiment is greater than the thickness T₀ of the thin material according to the default cross-sectional profile outside the coupling zone 114. It is noted that in alternative embodiments, the width W₁ of the flange portion 113 in the coupling zone 114 may equal the predetermined width W₀ outside the coupling zone 114, and/or the thickness T₁ within the coupling zone 114 may be the same as the thickness T₀ outside the coupling zone 114.

Adjacent to the coupling zone 114, a transition zone 116 of the frame segment 110 is formed wherein the flange portion 113 transitions from the predetermined width W₀ according to the default cross-section to the greater width W₁ valid in the coupling zone 114. Also, the second web portion 112 is removed only partly within the transition zone 116, thus forming a diagonal contour. Furthermore, the thin material of the frame segment 110 gradually transitions in the transition zone 116 from the thickness T₀ of the thin material according to the default cross-sectional profile outside the coupling zone 114 to the enhanced thickness T₁ valid within the coupling zone 114.

In the first foot portion 117, the first web portion 111, and the flange portion 113, rivet holes 107 are formed for fastening a coupling element to the coupling zone 114 in order to couple the frame segment 110 to a further frame segment. Further rivet holes (not shown) for attaching the frame segment 110 to the outer skin of the aircraft may be formed in the foot portions 117, 118.

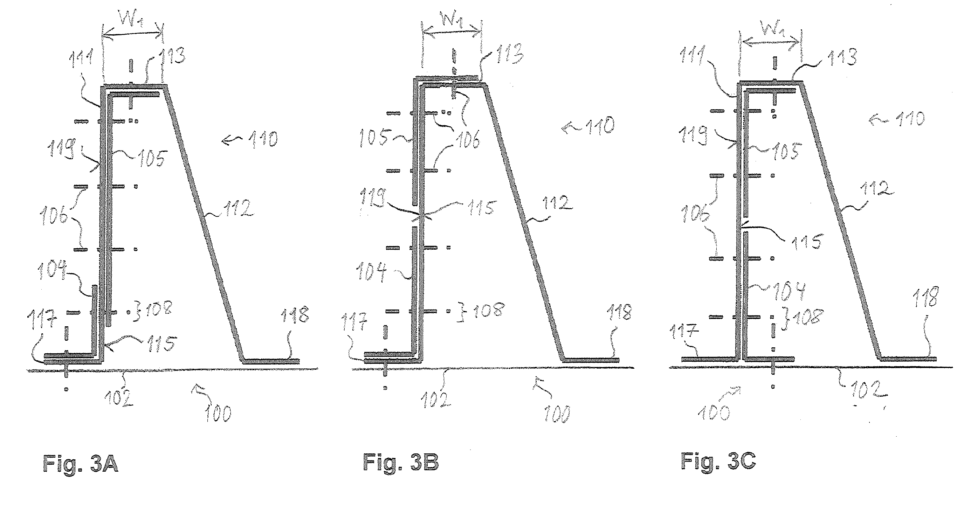

In order to couple the frame segment 110 shown in Figure 2 to another frame segment, e.g. as shown in Figure 1 to a second frame segment 120 of the same cross-section with a coupling zone 124 that is mirror-symmetric to the coupling zone 114 of the first frame segment 110, various arrangements of coupling elements 104, 105 may be chosen. One such arrangement of coupling elements 104, 105 is exemplified by the shell component 100 in Figure 1 and furthermore schematically illustrated in a cross sectional diagram of the shell component 100 given in Figure 3A. Because the second frame segment 120 in Figure 1 is mirror-symmetric to the first frame segment 110, it has an identical cross-sectional shape including a respective first foot portion 127, first web portion 121, flange portion 113, second web portion 122, and second foot portion 128. Also, a coupling zone 124 and a transition zone 126 are formed that are mirror-identical to the corresponding zones 114, 116 of the first frame segment 110.

As can be seen in Figure 3A, the lower L-profile 104 of the coupling element 104-106 comprises an L-shaped cross section with legs of approximately equal width and is attached from outside the first frame segment 110 to the first foot portion 117 and the lower part of the first web portion 111 of the first frame segment 110. In the same way, the lower L-profile 104 is also attached from the outside to the first foot portion 127 and the lower part of the first web portion 121 of the second frame segment 120. Figure 1 shows the lower L-profile 104 in a state before installation in its intended position, which is shown in Figure 3A.

The upper L-profile 105 of the coupling element 104-106 comprises an L-shaped cross section with one short leg, which is slightly shorter than the width W₁ of the flange portion 113 within the coupling zone 114, and one long leg, which is somewhat shorter than the height of the first web portion 111. The upper L-profile 105 is attached from inside the frame segments 110, 120 to the respective flange portions 113, 123 and first web portions 111, 121 of both frame segments 110, 120. As can be seen in Figure 3A, the legs of the upper L-profile 105 and the lower L-profile 104 that are attached to the first web portions 111, 121 overlap each other in the lower part of the frame segments 110, 120. While in the overlap region the upper L-profile 105 is formed equally wide as the lower L-profile 104, it is formed less wide than the lower L-profile 104 outside the overlap region. In order to couple the frame segments 110, 120 by means of the coupling element 104-106, rivets 106 are deployed throughout the area covered by the L-profiles 104, 105. Each rivet 106 runs through the material of one of the frame segments 110, 120 and at least one of the L-profiles 104, 105. In the region of overlap between the L-profiles 104, 105, rivets are deployed through both L-profiles 104, 105 and the one of the first web portions 111, 121. At the first foot portions 117, 127, rivets are deployed through the lower L-profile 104, one of the first foot portions 117, 127, and the skin 102.

Figures 3B and 3C show alternative examples for realising a coupling element 104-106 by using two L-shaped profiles 104, 105 and rivets 106. In the examples of both Figure 3B and 3C, the lower L-profile 104 and the upper L-profile 105 each have one short leg, which is slightly shorter than the width of the first foot portions 117, 127 and than the enhanced width W₁ of the flange portions 113, 123 of the frame segments 110, 120 in the respective coupling zones 114, 124, and one long leg, which is slightly shorter than half of the height of the first web portions 111, 121. (It is noted that Figures 3A-C do not show the second frame element 120 and its parts 121-128 due to the cross-sectional view being located at the border between the first and second frame segments 110, 120.) For example, the lower L-profile 104 and the upper L-profile 105 may be configured identical in shape, which simplifies assembly.

In the example of Figure 3B, the L-profiles 104, 105 are fastened to the frame segments 110, 120 from the outside. On the other hand, in the example of Figure 3C, the L-profiles 104, 105 are fastened to the frame segments 110, 120 from the inside. Here, the short leg of the lower L-profile 104 is oriented away from the first foot portion 127 and riveted to the skin 102, which it directly contacts.

Reference Signs
- 100: shell component
- 102: outer skin
- 104, 105: L-profile
- 106: rivet
- 107: rivet holes
- 108: lower row of rivet holes
- 110, 120: stiffening element, e.g. frame segment
- 111, 121: first web portion
- 112, 122: second web portion
- 113, 123: flange portion
- 114, 124: coupling zone
- 115, 125: inner surface
- 116, 126: transition zone
- 117, 127: first foot portion
- 118, 128: second foot portion
- 119: outer surface
- T₀: default material thickness
- T₁: material thickness in coupling zone
- W₀: default flange portion width
- W₁: flange portion width in coupling zone

## Claims

1. A method for coupling a first (110) and a second (120) stiffening element for a skin (102) of an aircraft or spacecraft, wherein the first stiffening element (110) has a cross-sectional profile with first (111) and second (112) web portions extending from a flange portion (113) of a predefined width (W₀) toward the skin (102), the method comprising:
Forming a coupling zone (114) of the first stiffening element (110) wherein the second web portion (112) is at least partially removed to expose an inner surface (115) of the first web portion (111); and
Fastening a coupling element (104-106), for coupling the stiffening elements (110, 120), to the coupling zone (114) of the first stiffening element (110).

2. The method according to claim 1, wherein in the coupling zone (114) the flange portion (113) comprises a greater width (W₁) than the predefined width (W₀).

3. The method according to claim 2, further comprising a step of forming a transition zone (116) of the first stiffening element (110) wherein the flange portion (113) transitions from the predetermined width (W₀) to the greater width (W₁), next to the coupling zone (114) on the first stiffening element (110).

4. The method according to any one of the preceding claims, wherein the second stiffening element (120) has the cross-sectional profile with first (121) and second (122) web portions extending from a flange portion (123) of the predefined width (W₀) toward the skin (102), further comprising a step of providing a coupling zone (124) of the second stiffening element (120) wherein the second web portion (122) is at least partially removed to expose an inner surface (125) of the first web portion (121), the coupling element (104-106) being fastened furthermore to the coupling zone (124) of the second stiffening element (120).

5. A stiffening element (110) for a skin (102) of an aircraft or spacecraft, comprising:
a cross-sectional profile with first (111) and second (112) web portions extending from a flange portion (113) of a predefined width (W₀) toward the skin (102); and
a coupling zone (114) wherein the second web portion (112) is at least partially removed to expose an inner surface (115) of the first web portion (111).

6. The stiffening element (110) according to claim 5, wherein in the coupling zone (114) the flange portion (113) comprises a greater width (W₁) than the predefined width (W₀).

7. The stiffening element (110) according to claim 5 or 6, wherein at least one of the flange portion (113) and the first web portion (112) in the coupling zone (114) comprises a greater thickness (T₁) than a corresponding thickness (T₀) outside the coupling zone (114).

8. The stiffening element (110) according to any one of claims 5 to 7, wherein the cross-sectional profile of the stiffening element (110) further has a second foot portion (118) for contacting the skin (104), the second web portion (112) extending from the flange portion (113) to the second foot portion (118), wherein in particular the second foot portion (118) is removed in the coupling zone (114).

9. The stiffening element (110) according to any one of claims 5 to 8, wherein the first web portion (111) extends substantially perpendicular to the skin (104).

10. A shell component (100) for an aircraft or spacecraft, comprising:
a skin (102) of the aircraft or spacecraft;
the stiffening element (110) according to claim 5 arranged on the skin (102);
a second stiffening element (120) arranged on the skin (102); and
a coupling element (104-106) coupling the stiffening elements (110, 120), which is fastened to the coupling zone (114) of the stiffening element (110).

11. The shell component (100) according to claim 10, wherein the coupling element (104-106) comprises at least one L-profile (104, 105) fastened to the stiffening element (110) and to the second stiffening element (120), in particular to the inner surface (115).

12. The shell component (100) according to claim 11, wherein the at least one L-profile (104, 105) comprises an upper L-profile (105) fastened to the first web portion (111) and the flange portion (113) of the stiffening element (110), and a lower L-profile (104) fastened to the first web portion (111) of the stiffening element (110) below the upper L-profile (105).

13. The shell component (100) according to claim 11, wherein the upper L-profile (105) and lower L-profile (104) are fastened to opposing surfaces (115, 119) of the first web portion (111) of the stiffening element (110).

14. The shell component (100) according to claim 11 or 13, wherein the upper L-profile (105) and lower L-profile (104) overlap.

15. The shell component (100) according to any one of claim 11 to 14, wherein the lower L-profile (104) is furthermore fastened to the skin (102).
